(19) Europäisches Patentamt
European Patent Office
Office européen des brevets

(11) **EP 4 002 290 A1**

(12) **EUROPEAN PATENT APPLICATION**
published in accordance with Art. 153(4) EPC

(43) Date of publication:
**25.05.2022 Bulletin 2022/21**

(51) International Patent Classification (IPC):
**G06T 17/00** (2006.01)

(21) Application number: **20914245.4**

(22) Date of filing: **30.10.2020**

(86) International application number:
**PCT/CN2020/125386**

(87) International publication number:
**WO 2021/143282 (22.07.2021 Gazette 2021/29)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.01.2020 CN 202010049667**

(71) Applicant: **TENCENT TECHNOLOGY (SHENZHEN) COMPANY LIMITED**
**Shenzhen, GUANGDONG 518057, (CN)**

(72) Inventors:
• **LI, Wenpan**
**Shenzhen, GUANGDONG 518057 (CN)**
• **BAO, Linchao**
**Shenzhen, GUANGDONG 518057 (CN)**
• **LIN, Xiangkai**
**Shenzhen, GUANGDONG 518057 (CN)**

(74) Representative: **Eisenführ Speiser**
**Patentanwälte Rechtsanwälte PartGmbB**
**Postfach 10 60 78**
**28060 Bremen (DE)**

(54) **THREE-DIMENSIONAL FACIAL MODEL GENERATION METHOD AND APPARATUS, COMPUTER DEVICE AND STORAGE MEDIUM**

(57)     Provided are a three-dimensional facial model generation method and apparatus, a computer device and a storage medium, wherein same belong to the technical field of computers. The method comprises: acquiring a plurality of target facial images and a plurality of corresponding depth images; according to an image type to which each target facial image belongs, acquiring, from each target facial image, a regional facial image matching the image type to which the target facial image belongs; according to the regional facial image in each target facial image, acquiring a regional depth image in a corresponding depth image; and according to a plurality of acquired regional facial images and a plurality of acquired regional depth images, carrying out fusion to generate a three-dimensional facial model for a human face. By means of cropping a plurality of acquired target facial images and a plurality of corresponding depth images, the amount of overlapping regions between different regional facial images are reduced, such that the calculation amount in the process of generating a three-dimensional facial model for a human face is small, thereby improving the efficiency of constructing the three-dimensional facial model.

FIG. 2

**Description**

This application claims priority to Chinese Patent Application No. 202010049667.6, titled "METHOD AND APPARATUS FOR GENERATING THREE-DIMENSIONAL FACE MODEL, COMPUTER DEVICE, AND STORAGE MEDIUM" filed with the China National Intellectual Property Administration on January 16, 2020, which is incorporated herein by reference in its entirety.

FIELD

Embodiments of the present disclosure relate to the technical field of computers, and in particular to a method and apparatus for generating a three-dimensional face model, a computer device, and a storage medium.

BACKGROUND

With the development of computer technologies, the three-dimensional face model is widely applied. The three-dimensional face model may be applied to many scenarios such as a game character construction scenario and a virtual character image construction scenario. A three-dimensional face model of the user may be generated by using the face image of the user, thereby facilitating usage by the user.

A method for generating a three-dimensional face model is provided in the related art, including: obtaining a video of a target face, and fusing multiple face images included in the video, to generate a three-dimensional face model. In the above method, the multiple face images in the video are fused, and a large calculation amount is generated in the fusion process, resulting in low efficiency in constructing the three-dimensional face model.

SUMMARY

According to embodiments of the present disclosure, a method and apparatus for generating a three-dimensional face model, a computer device, and a storage medium are provided, so as to improve the efficiency of constructing a three-dimensional face model. The technical solutions are as follows.

In an aspect, a method for generating a three-dimensional face model is provided. The method includes:

obtaining multiple target face images and multiple depth images corresponding to the multiple target face images, the multiple target face images each including a same face with a different orientation, and the multiple depth images including depth information of pixels in the target face images;

obtaining, according to an image type of each target face image, a regional face image that is in the corresponding target face image and that matches the image type of the corresponding target face image, the image type including a front face, a left face, a right face, or a head-up;

obtaining a regional depth image in a corresponding depth image according to the regional face image in each target face image, a position of the regional face image matching a position of the regional depth image; and

performing fusion on the obtained multiple regional face images and multiple regional depth images, to generate a three-dimensional face model.

In another aspect, an apparatus for generating a three-dimensional face model is provided. The apparatus includes a first image obtaining module, a second image obtaining module, a third image obtaining module and a face model generation module.

The first image obtaining module is configured to obtain multiple target face images and multiple depth images corresponding to the multiple target face images. The multiple target face images each include a same face with a different orientation, and the multiple depth images include depth information of pixels in the target face images.

The second image obtaining module is configured to obtain, according to an image type of each target face image, a regional face image that is in the corresponding target face image and that matches the image type of the corresponding target face image. The image type including a front face, a left face, a right face, or a head-up.

The third image obtaining module is configured to obtain a regional depth image in a corresponding depth image according to the regional face image in each target face image. A position of the regional face image matches a position of the regional depth image.

The face model generation module is configured to perform fusion on the obtained multiple regional face images and multiple regional depth images, to generate a three-dimensional face model.

In an embodiment, the second image obtaining module includes a mark point selection unit and a face image obtaining unit.

The mark point selection unit is configured to select, from multiple mark points in any target face image, at least one first mark point matching an image type of the target face image.

The face image obtaining unit is configured to obtain a regional face image formed by the at least one first mark point from the target face image.

In an embodiment, the image obtaining module includes a first image obtaining unit, an image sequence division unit and a second image obtaining unit.

The first image obtaining unit is configured to obtain multiple face images and multiple depth images corresponding to the multiple face images. The multiple face images include the face.

The image sequence division unit is configured to classify the multiple face images according to image types of the multiple face images, to obtain multiple image sequences. Each image sequence includes face images of a same image typ.

The second image obtaining unit is configured to select a target face image from each image sequence, to obtain the multiple target face images, and obtain the depth images corresponding to the multiple target face images.

In an embodiment, the multiple image sequences include at least a first image sequence having the front face type and a second image sequence having other image type. The second image obtaining unit is further configured to select a first face image from the first image sequence as the target face image; obtain a posture angle difference between each second face image in each second image sequence and the first face image; and select a second face image with a largest posture angle difference from each second image sequence as the target face image.

In an embodiment, the second image obtaining unit is further configured to determine, for any second face image, at least one second mark point in the second face image and at least one second mark point in the first face image that have a same serial number; obtain a rotation and translation matrix for the first face image and the second face image according to coordinates of the at least one second mark point in the first face image and coordinates of the at least one second mark point in the second face image; and transform the rotation and translation matrix, to obtain a posture angle difference between the second face image and the first face image.

In an embodiment, the image obtaining module includes: a third image obtaining unit and a face image determining unit.

The third image obtaining unit is configured to obtain multiple face images and multiple depth images corresponding to the multiple face images. The multiple face images include the face.

The face image determining unit is configured to determine a face image in an unblinking state in the multiple face images as the target face image according to an eye status of the face image. The eye status including a blinking state or the unblinking state.

In an embodiment, the apparatus further includes: a mark point determining module, a distance determining module, an eye aspect ratio determining module and a state determining module.

The mark point determining module is configured to determine, for any face image, an upper eyelid mark point, a lower eyelid mark point, a left canthus mark point, and a right canthus mark point of a target eye region in the face image.

The distance determining module is configured to determine a first distance between the upper eyelid mark point and the lower eyelid mark point, and a second distance between the left canthus mark point and the right canthus mark point.

The eye aspect ratio determining module is configured to determine a ratio of the first distance to the second distance as an eye aspect ratio of the target eye region.

The state determining module is configured to determine that the face image is in the blinking state if the eye aspect ratio is less than an eye aspect ratio threshold.

The state determining module is further configured to determine that the face image is in the unblinking state if the eye aspect ratio is not less than the eye aspect ratio threshold.

In an embodiment, the apparatus further includes:

a threshold determining module, configured to obtain a mean value of eye aspect ratios corresponding to multiple face images as the eye aspect ratio threshold.

In an embodiment, the face model generation module includes: a first fusion unit, a feature extraction unit and a second fusion unit.

The first fusion unit is configured to fuse the multiple regional depth images, to obtain a three-dimensional contour model.

The feature extraction unit is configured to extract color texture features of the regional face images from the multiple target face images.

The second fusion unit is configured to fuse the color texture features of the regional face images and the three-dimensional contour model, to generate the three-dimensional face model.

In an embodiment, the first fusion unit is further configured to transform the regional depth images corresponding to the target face images into point cloud data according to focal lengths corresponding to the target face images; and fuse the point cloud data corresponding to the target face images, to obtain the three-dimensional contour model.

In an embodiment, the multiple target face images include a first face image having the front face type and a second face image having other image type, and the first fusion unit is further configured to rotate second point cloud data corresponding to each second face image by a posture angle difference between each second face image and the first face image; and fuse each piece of second point cloud data obtained after rotation and first point cloud data corresponding to the first face image, to generate the three-dimensional contour model.

In an embodiment, the second fusion unit is further configured to determine a region corresponding to each regional face image in the three-dimensional contour model; and fuse the color texture features of the regional face images into surfaces of corresponding regions in the three-dimensional contour model, to generate the three-dimensional face model.

In another aspect, a computer device is provided, including a processor and a memory. The memory stores at least one computer program. The at least one computer program is loaded and executed by the processor to implement the method for generating a three-dimensional face model as described in the above aspect.

In another aspect, a computer-readable storage medium is provided, storing at least one computer program. The computer program is loaded and executed by a processor to implement the method for generating a three-dimensional face model as described in the above aspect.

In another aspect, a computer program product or a computer program is provided, the computer program product or the computer program including computer program codes. The computer program codes are stored in a computer-readable storage medium, a processor of a computer device reads the computer program codes from the computer-readable storage medium, and the processor executes the computer program code to implement the method for generating a three-dimensional face model as described in the above aspect.

The technical solutions provided in the embodiments of the present disclosure generate at least the following beneficial effects.

In the method and apparatus, the computer device, and the storage medium provided in the embodiments of the present disclosure, a regional face image that is in each target face image and that matches an image type of the target face image is obtained, and face images of other regions in the target face image are cropped, so that each obtained regional face image and a corresponding regional depth image include only a region matching the image type of the target face image, not including a region matching another image type, and an overlapping region between different regional face images is reduced. Fusion is performed on the obtained multiple regional face images and multiple regional depth images, and a calculation amount is small in a process of generating a three-dimensional face model, thereby improving the efficiency of constructing the three-dimensional face model.

BRIEF DESCRIPTION OF THE DRAWINGS

To describe the technical solutions in the embodiments of the present disclosure clearer, the accompanying drawings required for describing the embodiments are described briefly hereinafter. Apparently, the accompanying drawings in the following description show only some embodiments of the embodiments of the present disclosure, and a person of ordinary skill in the art may still derive other accompanying drawings from the accompanying drawings without creative efforts.

FIG. 1 is a schematic diagram of an implementation environment according to an embodiment of the present disclosure.

FIG. 2 is a flowchart of a method for generating a three-dimensional face model according to an embodiment of the present disclosure.

FIG. 3 is a schematic diagram of a face image sequence according to an embodiment of the present disclosure.

FIG. 4 is a schematic diagram of a face image according to an embodiment of the present disclosure.

FIG. 5 is a schematic diagram of a coordinate system according to an embodiment of the present disclosure.

FIG. 6 is a schematic diagram of multiple target face images according to an embodiment of the present disclosure.

FIG. 7 is a flowchart of a method for generating a three-dimensional face model according to an embodiment of the present disclosure.

FIG. 8 is a schematic diagram of multiple regional depth images according to an embodiment of the present disclosure.

FIG. 9 is a flowchart of a method for generating a three-dimensional face model according to an embodiment of the present disclosure.

FIG. 10 is a schematic diagram of a three-dimensional contour model according to an embodiment of the present disclosure.

FIG. 11 is a schematic diagram of a three-dimensional contour model according to an embodiment of the present disclosure.

FIG. 12 is a schematic diagram of a three-dimensional face model according to an embodiment of the present disclosure.

FIG. 13 is a flowchart of a method for generating a three-dimensional face model according to an embodiment of the present disclosure.

FIG. 14 is a schematic structural diagram of an apparatus for generating a three-dimensional face model according to an embodiment of the present disclosure.

FIG. 15 is a schematic structural diagram of an apparatus for generating a three-dimensional face model according to an embodiment of the present disclosure.

FIG. 16 is a schematic structural diagram of a terminal according to an embodiment of the present disclosure.

FIG. 17 is a schematic structural diagram of a server according to an embodiment of the present disclosure.

DETAILED DESCRIPTION OF EMBODIMENTS

To make objectives, technical solutions, and advantages of the embodiments of the present disclosure clearer, implementations of the present disclosure are described in detail with reference to the accompanying drawings.

The terms "first", "second", and the like used in the present disclosure may be used for describing various concepts in this specification. However, the concepts are not limited by the terms unless otherwise specified. The terms are merely used for distinguishing one concept from another concept. For example, without departing from the scope of the present disclosure, a first face image may be referred to as a second face image, and similarly, the second face image may be referred to as the first face image.

For the terms "at least one", "a plurality of", "each", and "any" used in the present disclosure, "at least one" refers to "one", "two", or "more", "a plurality of" refers to "two" or "more", "each" refers to "each of a plurality of ", and "any" refers to "any one of a plurality of". For example, when "a plurality of elements" refers to "three elements", "each" refers to "each of the three elements", and "any" refers to "any one of the three elements", that is, the element may be the first element, the second element, or the third element.

For ease of understanding the technical solutions in the embodiments of the present disclosure, some terms involved in the embodiments of the present disclosure are explained below.

Color depth (red, green, and blue-depth, RGB-D) image sequence: an RGB image sequence with color information and a depth image sequence with depth information acquired by a depth camera. The RGB image is used for extracting texture information of a three-dimensional model, and a depth image is used for obtaining three-dimensional information.

Perspective-n-Point (PnP, computer vision): in a world coordinate system, three-dimensional coordinates of n space points and two-dimensional projections of these space points on an image are known, a camera posture is to be solved. The PnP is used for calculating a posture angle of rotation of a face in the embodiments of the present disclosure.

Random sample consensus (RANSAC): a random sample consensus algorithm. According to the algorithm, parameters of a mathematical model are estimated in an iteration manner from an observation data set including "outliers".

Iterative closest point (ICP): an ICP algorithm is a point cloud matching algorithm. According to the algorithm, a spatial transformation relationship between two point clouds is calculated through iteration, so that the two point clouds are transformed into the same coordinate system for registration and alignment.

Singular value decomposition (SVD): an important method for decomposing a matrix in linear algebra. With this method, a left singular matrix, a Sigma (covariance) matrix, and a right singular matrix can be obtained.

Surfel (point element) model: a three-dimensional point cloud data model, in which each point cloud stores position information of a point, a radius of a patch, a normal vector, color information, and time of obtaining point cloud data.

A method for generating a three-dimensional face model provided in the embodiments of the present disclosure can be applied to a computer device. In a possible implementation, the computer device is a terminal. In an embodiment, the terminal may be a mobile phone, a computer, and a tablet computer.

The terminal obtains multiple target face images and multiple corresponding depth images by capturing a face by a depth camera, and determines multiple regional face images and multiple regional depth images according to the obtained multiple target face images and multiple depth images, to generate a three-dimensional face model of the face according to the multiple regional face images and the multiple regional depth images.

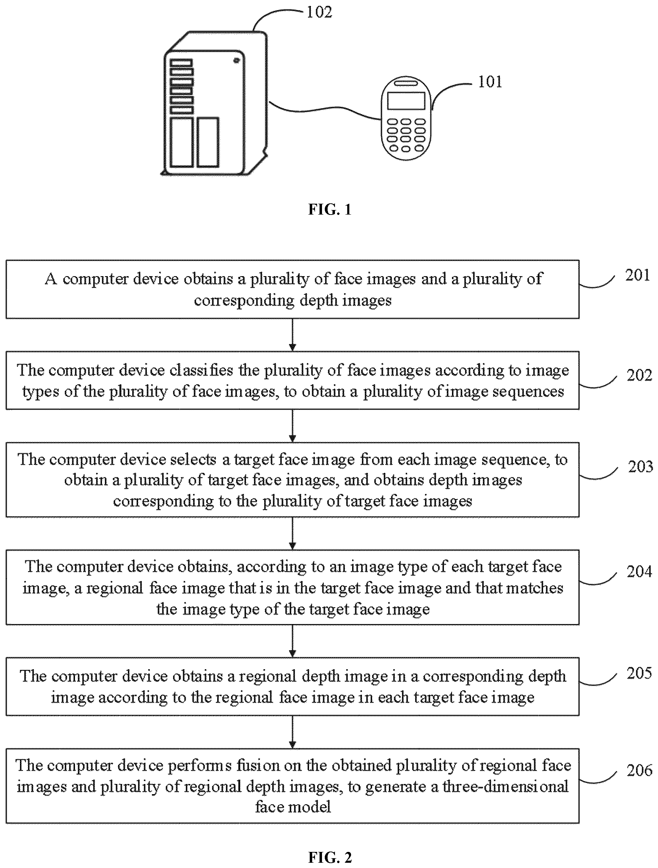

In another possible implementation, the computer device includes a server and a terminal. FIG. 1 is a schematic structural diagram of an implementation environment according to an embodiment of the present disclosure. As shown in FIG. 1, a terminal 101 and a server 102 are included in the implementation environment. The terminal 101 establishes a communication connection with the server 102, and interacts with the server 102 through the established communication connection.

In an embodiment, the terminal 101 may be a mobile phone, a computer, and a tablet computer. In an embodiment, the server 102 is a server, or a server cluster that includes multiple servers, or a cloud computing service center.

The terminal 101 obtains multiple target face images and multiple corresponding depth images by capturing a face by a depth camera, and transmits the obtained multiple target face images and multiple depth images to the server 102. The server 102 determines multiple regional face images and multiple regional depth images according to the multiple target face images and the multiple depth images that are received, to generate a three-dimensional face model of the face according to the multiple regional face images and the multiple regional depth images. The server 102 transmits the generated three-dimensional face model to the terminal 101, and the terminal 101 displays the three-dimensional face model for using by a user.

The method provided in this embodiment of the present disclosure may be used to construct a three-dimensional face model in various scenarios, so as to meet interactive entertainment requirements in different scenarios. For example, a three-dimensional face model can be accurately constructed in scenarios such as a game and a publicity release, which is used to construct realistic game character attributes. In daily conversations and exchanges, the constructed three-dimensional face model is used to customize exclusive emojis to enhance the fun of chatting. In an embodiment, the constructed three-dimensional face model is further widely applied to entertainment scenarios such as a virtual makeup scenario, a virtual fitting scenario, and a virtual character image scenario.

For example, a simulation game character setting scenario is described below.

In a game scenario interface displayed on a terminal, the user clicks a simulation game character setting button to enable a depth camera of the terminal. A face of the user is captured by the depth camera, to obtain multiple face images and corresponding depth images. The terminal then generates, by using the method for generating a three-dimensional face model provided in the embodiments of the present disclosure, a three-dimensional face model according to the obtained multiple target face images and multiple corresponding depth images, and displays the three-dimensional face model in the game scenario interface of the terminal, so that the user can use the three-dimensional face model as a face of a simulation game character through the game scenario interface.

FIG. 2 is a flowchart of a method for generating a three-dimensional face model according to an embodiment of the present disclosure. The method is applied to a computer device. As shown in FIG. 2, the method includes the following steps 201 to 203.

In step 201, a computer device obtains multiple face images and multiple corresponding depth images.

In an embodiment, the face image and the corresponding depth image are obtained by capturing a face with a depth camera. The face image is an RGB three-channel color image including a face, and the depth image includes depth information of pixels in the corresponding face image. Each pixel in the face image corresponds to a position in the face. The depth information of any pixel can be expressed as a distance between a position in the face corresponding to the pixel and a position of the depth camera, so that a distance between the position of the depth camera and any point of the face can be determined in a real space according to the depth information in the depth image. The multiple face images include the same face. In an embodiment, in the multiple face images, the orientation of the face is different. For example, the face faces a front direction, the face faces the left, the face faces the right, and the face faces upward. The multiple face images are in a one-to-one correspondence with the multiple depth images.

In a possible implementation, step 201 is implemented as follows. The computer device captures the face by using the depth camera, to obtain multiple face images and multiple corresponding depth images. The depth camera is configured to obtain the face image and the corresponding depth image. When the computer device captures the face by using the depth camera, the obtained face images and depth images are a in one-to-one correspondence.

In an embodiment, the depth camera includes a camera and a depth sensor. When the depth camera captures a face, a face image can be captured by the camera, and a depth image corresponding to the face image can be obtained by the depth sensor. For example, a mobile phone includes a camera and a depth sensor. When a user clicks a camera button of the mobile phone to take a picture of the face of the user, a face image is obtained by using the camera, and a depth image corresponding to the face image is obtained by the depth sensor.

In an embodiment, when the computer device captures a face, the face rotates in a preset order, so that the computer device captures multiple pictures. In an embodiment, according to the preset order, at an initial position, the front of the face faces the computer device, the face is turned to the left, the face is turned to the right to return to the initial position, the face is turned to the right, the face is turned to the left to return to the initial position, and the face is raised up. During the rotation of the face, the computer device captures the face, and can obtain multiple face images and multiple corresponding depth images. In an embodiment, the computer device captures a video of a face, or captures a face at a preset capturing interval. For example, the preset capturing interval is 1 second.

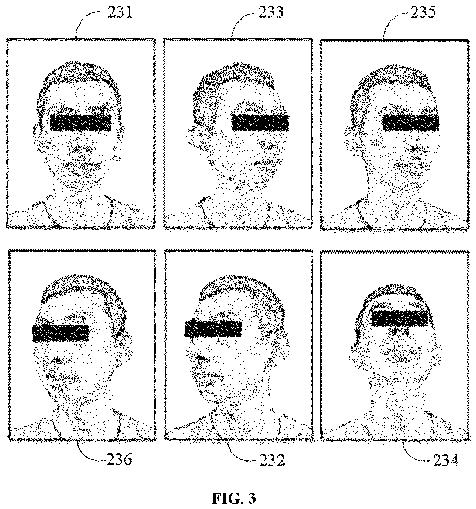

In an embodiment, the multiple face images and the multiple corresponding depth images obtained by the computer device function as an RGB-D image sequence. As shown in FIG. 3, the multiple face images are an RGB-D image sequence including an RGB image sequence with color information, which includes a face image 231, a face image 232, a face image 233, a face image 234, a face image 235, and a face image 236. The multiple depth images are an RGB-D image sequence including a depth image sequence with depth information.

In step 202, the computer device classifies the multiple face images according to image types of the face images, to obtain multiple image sequences.

The face images are classified into multiple image types according to different face orientations. The image types include a front face type, a left face type, a right face type, or a head-up type. A face in a face image having the front face type faces a front direction. A face in a face image having the left face type faces the right side of the face. A face in a face image having the right face type faces the left side of the face. A face in a face image having the head-up type faces upwards. As shown in FIG. 3, the face image 231 has the front face type, the face image 232 and the face image 236 have the left face type, the face image 233 and the face image 235 havethe right face type, and the face image 234 has the head-up type.

Each image sequence includes at least one face image, and each image sequence includes face images of the same image type. After obtaining the multiple face images, the computer device determines the image types of the multiple face images, and classifies the face images among the multiple face images having the same image type into an image sequence, so that the obtained multiple image sequences include at least one of a front face image sequence, a left face image sequence, a right face image sequence, and a head-up image sequence.

For determining the image types of the multiple face images, in a possible implementation, the computer device detects mark points on the multiple face images, to determine at least one mark point included in each face image. For any face image, in a case that the number of mark points in the face image matching any image type exceeds a preset threshold, it is determined that the face image has the image type. In an embodiment, for any face image, the number of mark points in the face image matching each image type is determined, and an image type with the largest number of matched mark points is determined as an image type of the face image.

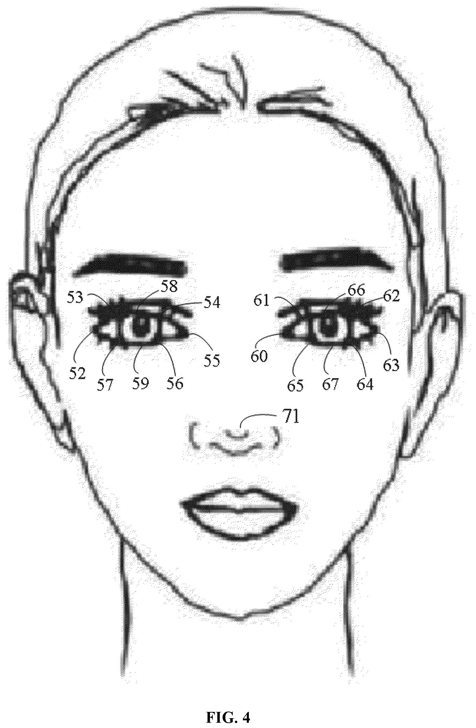

In an embodiment, each face image includes at least one mark point, and each mark point indicates a position in the face. In multiple mark points, different mark points indicate different positions in the face. As shown in FIG. 4, the face image includes multiple mark points such as mark points 52 to 59, mark points 60 to 67, and a mark point 71. Different mark points are located at different positions in the face. For example, the mark point 71 indicates a position of a nose tip in the face, and the mark point 60 indicates a position of a right canthus in the face. Different mark points indicate different positions in the face. Therefore, the image types matching the different mark points can be set.

In an embodiment, for the face image having the front face type, mark points indicating the nose tip, the eye region, and the lips region of the face are configured as mark points that match the front face type; and for the face image having the left face type, mark points indicating multiple positions in the left face are configured as mark points that match the left face type. The computer device can determine the mark points included in each face image by detecting mark points in the face included in each face image, and subsequently, can determine, according to the image type matched with the mark points included each face image, the image type of each face image.

In an embodiment, the computer device detects mark points in the multiple face images by using a mark point detection model, to determine the mark points included in the face images. In an embodiment, the mark point detection model is a convolutional neural network model, which is obtained by training a large number of samples.

In another possible implementation, according to an order in which the multiple face images are obtained, the computer device determines a first face image as the front face image and determines remaining face images in the multiple face images as face images of which image types are to be determined; detects mark points on the multiple face images, to determine at least one mark point included in each face image; determines, for any one of the face images, a preset number of target mark points included in both the face image and the front face image, and determines a posture angle difference between the face image and the front face image by using coordinates of target mark points in the face image and coordinates of target mark points in the front face image; and determines, according to a posture angle difference corresponding to each face image, an image type of each face image.

The multiple face images are sequentially obtained in a chronological order. When the face is to be captured, the front of the face faces the depth camera, and the first obtained face image is a front face image.

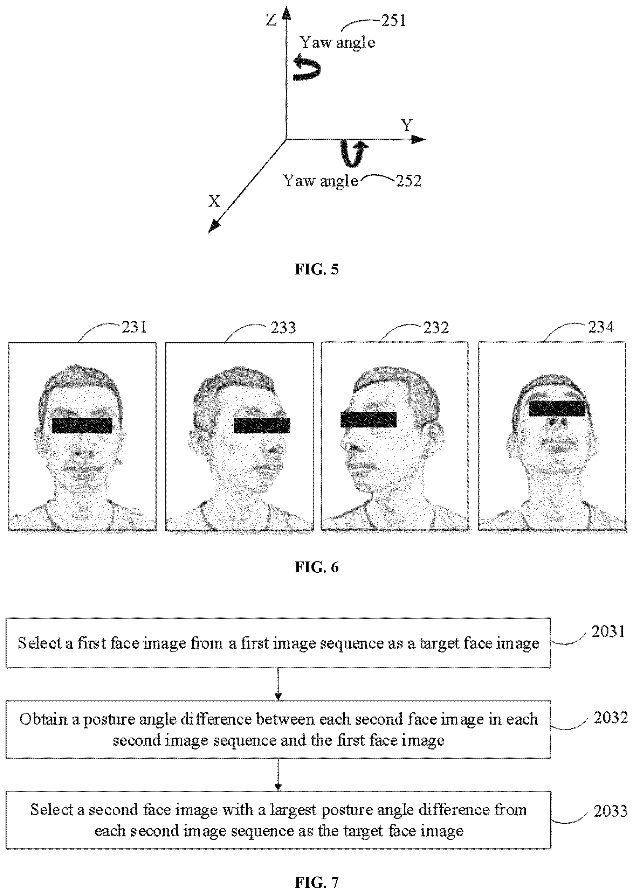

The posture angle difference includes a yaw angle difference or a pitch angle difference. As shown in FIG. 5, the front of the face faces a positive direction of an X axis, a rotation angle of the face around a Z axis is a yaw angle 251, and a rotation angle of the face around a Y axis is a pitch angle 252. In an embodiment, the yaw angle difference and the pitch angle difference are both positive or negative. If the yaw angle difference corresponding to the face image is positive, it is determined that the face image has the left face type. If the yaw angle difference corresponding to the face image is negative, it is determined that the face image has the right face type. If the pitch angle difference corresponding to the face image is positive, it is determined that the face image has the head-up type. For example, if the face turns to the right, a left face region of the face is displayed in a captured face image, and a yaw angle difference between the face image and the front face image is positive. If the face turns to the left, a right face region of the face is displayed in a captured face image, and a yaw angle difference between the face image and the front face image is negative. If the face is raised up, a chin region and a neck region of the face is displayed in a captured face image, and a pitch angle difference between the face image and the front face image is positive.

In an embodiment, according to coordinates of target mark points with the same serial number in the face image and the front face image, a rotation matrix for the face image and the front face image is determined, and the rotation matrix is transformed into an angle as the posture angle difference between the face image and the front face image. In an embodiment, a posture angle difference between a to-be-determined face image and the front face image is calculated by using a PnP algorithm.

In addition, the preset number is set by the computer device. For example, the preset number is 10. In an embodiment, if the number of common mark points included in the to-be-determined face image and the front face image is greater than the preset number, a random algorithm such as a RANSAC algorithm is used to determine the preset number of target mark points from the common mark points included in the to-be-determined face image and the front face image.

In step 203, the computer device selects a target face image from each image sequence, to obtain multiple target face images, and obtains depth images corresponding to the multiple target face images.

Each image sequence includes face images of the same image type, the face included in the face images of the same image type has an overlapping region. Therefore, a target face image is selected from each image sequence, and the multiple target face images can be obtained from multiple image sequences, so that a three-dimensional face model can be generated based on the selected multiple target face images, thereby improving the efficiency of generating the three-dimensional face model. In an embodiment, the multiple target face images include a face image having the head-up type, so that the subsequently generated three-dimensional face model can include a chin region and a neck region of the face.

In addition, in the multiple image sequences, different image sequences correspond to different image types, so that different target face images in the obtained multiple target face images have different image types. As shown in FIG. 6, the multiple target face images include a face image 231 having the front face type, a face image 232 having the left face type, a face image 233 having the right face type, and a face image 234 having the head-up type.

In a possible implementation, a process of selecting a target face image from an image sequence by the computer device includes the following steps 2031 to 2033, as shown in FIG. 7.

In step 2031, a first face image is selected from a first image sequence as the target face image.

In this embodiment of the present disclosure, the multiple image sequences include at least a first image sequence having the front face type and a second image sequence having other image type. In an embodiment, all the first face images in the first image sequence have the front face type, and a first face image is randomly selected from the first image sequence as the target face image. In an embodiment, the first face images in the first image sequence are arranged based on capturing time, and a first face image captured earliest serves as the target face image.

In step 2032, a posture angle difference between each second face image in each second image sequence and the first face image is obtained.

The description of the posture angle difference in step 2032 is similar to the description of the posture angle difference in step 202, and details are not described herein again. In addition, a manner of obtaining the posture angle difference in step 2032 may be similar to a manner of obtaining the posture angle difference in step 202, and details are not described herein again.

In a possible implementation, step 2032 includes: determining, for any second face image, at least one second mark point in the second face image and at least one second mark point in the first face image that have a same serial number; obtaining a rotation and translation matrix for the first face image and the second face image according to coordinates of the at least one second mark point in the first face image and coordinates of the at least one second mark point in the second face image; and transforming the rotation and translation matrix, to obtain a posture angle difference between the second face image and the first face image.

In an embodiment, each face image includes multiple mark points, each mark point indicates a position in the face, and different mark points indicate different positions in the face. Therefore, the multiple mark points are set with different serial numbers, and a mark point can be determined according to a corresponding serial number. For example, as shown in FIG. 4, the mark point 71 indicates a position of the nose tip of the face, and the mark point 60 indicates a position of the right canthus on the face.

Coordinates of the at least one second mark point in the first face image and the second face image are different. According to the coordinates of the at least one second mark point in the first face image and the coordinates of the at least one second mark point in the second face image, a rotation and translation matrix d for transforming the coordinates of the at least one second mark point in the first face image into the coordinates of the at least one second mark point in the second face image can be determined, or, a rotation and translation matrix for transforming the coordinates of the at least one second mark point in the second face image into the coordinates of the at least one second mark point in the first face image can be determined. The rotation and translation matrix is transformed into an angle, and the angle serves as the posture angle difference between the second face image and the first face image.

In an embodiment, the number of selected second mark points is a preset number, which is similar to the preset number of target mark points in step 202, and details are not described herein again.

In another possible implementation, step 202 includes: determining, for any second face image, a mark point set $S$ in the second face image, and a mark point set $M$ in the first face image; randomly selecting a preset number of mark points from the mark point set $S$, to obtain a mark point set $S'$, and randomly selecting a preset number of mark points from the mark point set $M$, to obtain a mark point set $M'$, the mark points in the mark point set $S'$ being in a one-to-one correspondence with the mark points in the mark point set $M'$; respectively determining a centroid $\mu_s$ and a centroid $\mu_m$ of the mark point set $S'$ and the mark point set $M'$; respectively subtracting coordinates of the corresponding centroid $\mu_s$ and centroid $\mu_m$ from coordinates of the mark points in the mark point set $S'$ and the mark point set $M'$, to obtain a new mark point set $s'$ and a new mark point set $m'$. The mark point set $S'$, the mark point set $M'$, the mark point set $s'$, and the mark point set $m'$ satisfy the following relationship:

$$\begin{cases} m' = M' - \mu_m \\ s' = S' - \mu_s \end{cases}.$$

A matrix $W$ is constructed by using the mark point set $s'$ and the mark point set $m'$, and the matrix $W$ is decomposed, to obtain a matrix $U$ and a matrix $V$. The mark point set $s'$, the mark point set $m'$, the matrix $W$, the matrix $U$, and the matrix $V$ satisfy the following relationship:

$$\begin{cases} W = m'*(s')^T \\ W = U \wedge V^T \end{cases}.$$

A rotation matrix $R$ for the first face image and the second face image is obtained by using the matrix $U$ and the matrix $V$. A translation matrix $t$ for the first face image and the second face image is obtained by using the rotation matrix $R$, the centroid $\mu_s$, and the centroid $\mu_m$. The matrix $U$, the matrix $V$, the rotation matrix $R$, the translation matrix $t$, the centroid $\mu_s$, and the centroid $\mu_m$ satisfy the following relationship:

$$\begin{cases} R = U*V^T \\ t = \mu_s - R*\mu_m \end{cases}.$$

The rotation matrix $R$ and the translation matrix $t$ are fused to obtain the rotation and translation matrix, and the rotation and translation matrix is transformed to obtain the posture angle difference between the second face image and the first face image. $T$ in the formula is used for indicating that a matrix is transposed to obtain a transposed matrix of the matrix. For example, a transposed matrix of the matrix $V$ is $V^T$. In an embodiment, in the above process, the posture angle difference between the second face image and the first face image is obtained by using the RANSAC algorithm and an ICP algorithm.

In step 2033, a second face image with a largest posture angle difference is selected from each second image sequence as the target face image.

The first face image has the front face type, and the second face image has another image type such as the left face type or the right face type. Therefore, a larger posture angle difference between the second face image and the first face image indicates that a region that matches the image type of the second face image and that is included in the second face image is more complete, and the subsequently generated three-dimensional face model is more accurate. Therefore, the second face image with the largest posture angle difference is selected from each second image sequence as the target face image. For example, a face region corresponding to the left face type is the left face, posture angle differences between two second face images of the left face type and the first face image are respectively 20 degrees and 30 degrees. The left face displayed in the second face image with the posture angle difference of 30 degrees is more complete than the left face displayed in the second face image with the posture angle difference of 20 degrees. Therefore, the second face image with the posture angle difference of 30 degrees is selected as the target face image.

In this embodiment of the present disclosure, the target face image is determined by classifying the obtained multiple face images into multiple image sequences. In another embodiment, the method may further include: obtaining the plurality of face images and the plurality of corresponding depth images; and determining a face image in an unblinking state in the plurality of face images as the target face image according to an eye status of the face image. The eye status includes a blinking state or the unblinking state.

Features of an eye region in the face included in the face image that is in the blinking state are incomplete. The face image in the blinking state is used to generate a three-dimensional face model, resulting in low accuracy of the three-dimensional face model. Therefore, a face image that is in the unblinking state needs to be selected before the three-dimensional face model is generated, so as to generate the three-dimensional face model subsequently.

For a manner of determining the eye status of the face image, in a possible implementation, the method further includes: determining, for any face image, an upper eyelid mark point, a lower eyelid mark point, a left canthus mark point, and a right canthus mark point of a target eye region in the face image; determining a first distance between the upper eyelid mark point and the lower eyelid mark point, and a second distance between the left canthus mark point and the right canthus mark point; determining a ratio of the first distance to the second distance as an eye aspect ratio of the target eye region; determining that the face image is in the blinking state if the eye aspect ratio is less than an eye aspect ratio threshold; and determining that the face image is in the unblinking state if the eye aspect ratio is not less than the eye aspect ratio threshold.

In an embodiment, the target eye region is a left eye region or a right eye region, where the left eye region refers to an eye region on the left side of the face image, including the right eye on the face; and the right eye region refers to an eye region on the right side of the face image, including the left eye on the face. The eye aspect ratio represents a degree of eye opening and closing, and the eye status of the eye region can be determined based on the eye aspect ratio. In an embodiment, the eye aspect ratio threshold is preset according to eye aspect ratios of multiple eye regions in the face; or is determined according to the eye aspect ratios of the eye regions in the multiple face images. A process of determining the upper eyelid mark point, the lower eyelid mark point, the left canthus mark point, and the right canthus mark point is similar to the process of determining the mark point in step 202, and details are not described herein again.

The first distance can be determined according to coordinates of the upper eyelid mark point and coordinates of the lower eyelid mark point, and the second distance can be determined according to coordinates of the left canthus mark point and coordinates of the right canthus mark points. The eye aspect ratio of the target eye region can be determined according to the first distance and the second distance, and the eye status of the face image can be determined according to the eye aspect ratio and the eye aspect ratio threshold. In a case of determining the eye status of the face image, if any of the left eye region and the right eye region is in the blinking state, it is determined that the face image is in the blinking state; and if both the left eye region and the right eye region being in the unblinking state, it is determined that the face image is in the unblinking state.

In an embodiment, a mean value of eye aspect ratios corresponding to the multiple face images is obtained as the eye aspect ratio threshold. Eye aspect ratio thresholds of eye regions in different faces are different. Therefore, in a case of determining an eye aspect ratio threshold of a current face, the eye aspect ratio threshold needs to be determined according to eye aspect ratios of multiple face images of the current face, so that the obtained eye aspect ratio threshold matches the current face, thereby improving the accuracy of the determined eye status of the face image. In addition, for multiple face images of any face, eye statuses of the face images may be different, thus eye aspect ratios corresponding to the face images may be different. A mean value of the eye aspect ratios corresponding to the multiple face images serves as an eye aspect ratio threshold of this face, so that the obtained eye aspect ratio threshold matches the face, thereby improving the accuracy of the determined eye status of the face image.

In an embodiment, eye aspect ratio thresholds of left eye regions and eye aspect ratio thresholds of right eye regions in the multiple face images are respectively determined, so that eye statuses of the left eye regions in the multiple face images can be determined according to the eye aspect ratio thresholds of the left eye regions, and eye statuses of the right eye regions in the multiple face images can be determined according to the eye aspect ratio thresholds of the right eye regions in the same face, the eye aspect ratio threshold of the left eye region is different from the eye aspect ratio threshold of the right eye region. Therefore, the eye aspect ratio thresholds of the left eye regions and the eye aspect ratio thresholds of the right eye regions in the multiple face images are respectively determined, to accurately determine the eye status of the face image subsequently, thereby improving the accuracy of the determined eye status of the face image.

In an embodiment, multiple upper eyelid mark points and multiple lower eyelid mark points in the target eye region are determined. The multiple upper eyelid mark points are in a one-to-one correspondence with the multiple lower eyelid mark points. For example, as shown in FIG. 4, serial numbers of the upper eyelid mark points are 53, 54, and 58, serial numbers of the lower eyelid mark points are 57, 56, and 59, the serial number 53 corresponds to the serial number 57, the serial number 54 corresponds to the serial number 56, and the serial number 58 corresponds to the serial number 59.

In an embodiment, in the target eye region in the face image, coordinates $l_1$ of an upper eyelid mark point 1, coordinates $l_2$ of an upper eyelid mark point 2, and coordinates $l_3$ of an upper eyelid mark point 3 in the multiple upper eyelid mark points are determined, coordinates $l_4$ of a lower eyelid mark point 4, coordinates $l_5$ of a lower eyelid mark point 5, and coordinates $l_6$ of a lower eyelid mark point 6 in the multiple lower eyelid mark points are determined, coordinates of a left canthus mark point 7 are $l_7$, and coordinates of a right canthus mark point 8 are $l_8$. An eye aspect ratio $d$ of the target eye region in the face image can be determined by using the coordinates $l_1$, $l_2$, $l_3$, $l_4$, $l_5$, $l_6$, $l_7$, and $l_8$. The coordinates $l_1$, $l_2$, $l_3$, $l_4$, $l_5$, $l_6$, $l_7$, and $l_8$ as well as the eye aspect ratio $d$ satisfy the following relationship:

$$d = \frac{\|l_1 - l_4\|_2 + \|l_2 - l_5\|_2 + \|l_3 - l_6\|_2}{\|l_7 - l_8\|_2}$$

In which, $\|l_1 - l_4\|_2$ indicates a two-norm of a vector formed by the upper eyelid mark point 1 and the lower eyelid mark point 2, that is, a sum of squares of the vector is calculated and a square root of the sum is calculated, which is used for indicating a distance between the upper eyelid mark point 1 and the lower eyelid mark point 2. $\|l_2 - l_5\|_2$ indicates a distance between the upper eyelid mark point 2 and the lower eyelid mark point 5, $\|l_3 - l_6\|_2$ indicates a distance between the upper eyelid mark point 3 and the lower eyelid mark point 6, and $\|l_7 - l_8\|_2$ indicates a distance between the upper eyelid mark point 7 and the lower eyelid mark point 8.

For example, as shown in FIG. 4, the target eye region is a left eye region. In the left eye region, serial numbers of multiple upper eyelid mark points are 53, 54, and 58, serial numbers of multiple lower eyelid mark points are 56, 57, and 59, a left canthus mark point is indicated by 55, a right canthus mark point is indicated by 52, an eye aspect ratio threshold of the left eye region is indicated by $D_1$. It is determined that the left eye region in the face image is in the blinking state when the left eye region in the face image satisfies the following formula:

$$d = \frac{\|l_{58} - l_{59}\|_2 + \|l_{53} - l_{57}\|_2 + \|l_{54} - l_{56}\|_2}{\|l_{52} - l_{55}\|_2} < D_1$$

For example, as shown in FIG. 4, the target eye region is a right eye region. In the right eye region, serial numbers of multiple upper eyelid mark points are 61, 62, and 66, serial numbers of multiple lower eyelid mark points are 64, 65, and 67, a left canthus mark point is indicated by 63, a right canthus mark point is indicated by 60, an eye aspect ratio threshold of the right eye region is indicated by $D_2$. It is determined that the right eye region in the face image is in the blinking state when the right eye region in the face image satisfies the following formula:

$$d = \frac{\|l_{66} - l_{67}\|_2 + \|l_{61} - l_{65}\|_2 + \|l_{62} - l_{64}\|_2}{\|l_{60} - l_{63}\|_2} < D_2$$

In another embodiment, the obtained multiple face images are classified into the multiple image sequences and the eye statuses of the multiple face images are obtained, thereby determining the target face image.

In step 204, the computer device obtains, according to an image type of each target face image, a regional face image that is in the target face image and that matches the image type of the target face image.

The regional face image is a partial region in the face image. For example, a regional face image matching the front face type includes a front face region of a face, a regional face image matching the left face type includes a left face region of the face, a regional face image matching the right face type includes a right face region of the face, and a regional face image matching the head-up type includes a chin region and a neck region of the face.

In a possible implementation, step 204 includes: selecting, from multiple mark points in any target face image, at least one first mark point matching an image type of the target face image; and obtaining a regional face image formed by the at least one first mark point from the target face image. Because a matching image type is set for each mark point, at least one first mark point matching the image type in the target image can be determined. The description of setting a matching image type for each mark point is similar to the description in step 202, and details are not described herein again.

In an embodiment, edge point detection is performed on the at least one first mark point, to determine multiple edge points. The multiple edge points are connected to form an enclosed region, and a face image corresponding to the enclosed region serves as the regional face image. Except for the multiple edge points, remaining parts of the at least one first mark points are all located in the enclosed region.

In step 205, the computer device obtains a regional depth image in a corresponding depth image according to the regional face image in each target face image.

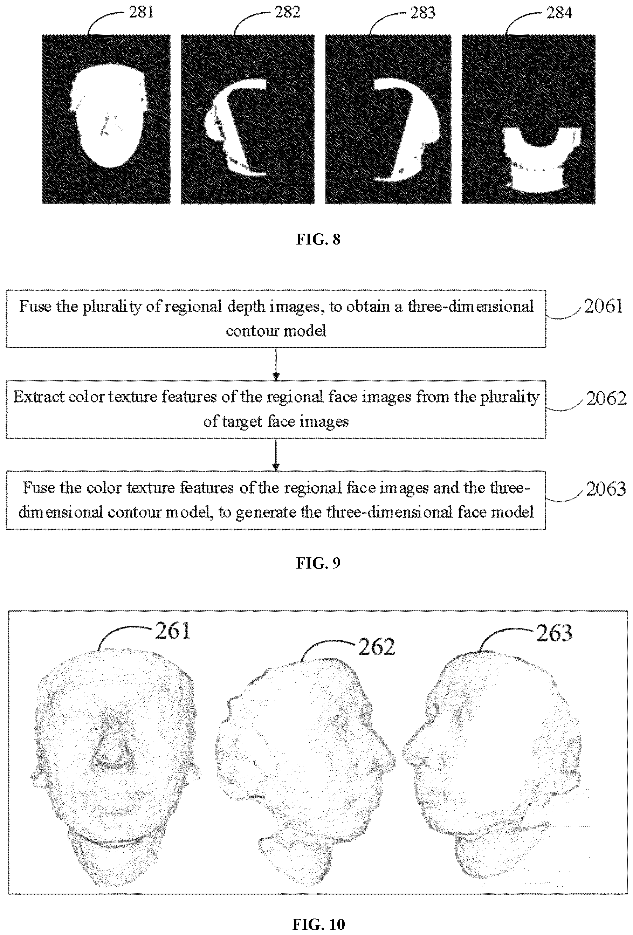

Pixels in each target face image are in a one-to-one correspondence with pixels in the corresponding depth image. After the regional face image in the target face image is determined, the regional depth image can be determined from the depth image. A position of the regional face image matches a position of the regional depth image. The regional depth image includes depth information of the pixels in the corresponding regional face image. As shown in FIG. 8, multiple regional depth images are included in FIG. 8. A regional depth image 281 has the front face type, a regional depth image 282 has the left face type, a regional depth image 283 has the right face type, and a regional depth image 284 has the head-up type.

In step 206, the computer device performs fusion on the obtained multiple regional face images and multiple regional depth images, to generate the three-dimensional face model.

Each pixel in each regional face image has a corresponding color, and each regional depth image includes the depth information of each pixel in the corresponding regional face image. Therefore, a skin color and contour of the face can be obtained by using the multiple regional face images and the multiple regional depth images, thereby generating the three-dimensional face model.

In an embodiment, the multiple regional face images include a regional face image having the head-up type, so that the generated three-dimensional face model can include a chin region and a neck region of the face.

In a possible implementation, as shown in FIG. 9, step 206 includes the following steps 2061 to 2063.

In step 2061, the multiple regional depth images are fused, to obtain a three-dimensional contour model.

Because each regional depth image includes the depth information of each pixel in the corresponding regional face image, the contour of the face can be obtained by fusing the multiple regional depth images, thereby obtaining the three-dimensional contour model of the face.

In a possible implementation, step 2061 includes: transforming the regional depth images corresponding to the target face images into point cloud data according to focal lengths corresponding to the target face images; and fusing the point cloud data corresponding to the target face images, to obtain the three-dimensional contour model.

The point cloud data includes multiple points, and each point has three-dimensional coordinates. The regional depth image corresponding to each target face image includes the depth information of each pixel. According to two-dimensional coordinates of each pixel in the regional depth image and the depth information of each pixel in each regional depth image, three-dimensional coordinates of each pixel can be determined, so that each regional depth image is transformed into the point cloud data. In addition, because the target face image is obtained by capturing the face by the depth camera based on a focal length, the target face image is a reduced image of a real face. A distance between each pixel in the regional depth image and the depth camera can be determined by using the determined coordinates of each pixel in the target face image. The distance between each pixel and the depth camera is processed by using the focal length corresponding to the target face image, so that a real distance between a position corresponding to each pixel and the depth camera can be determined, real distances between multiple positions can be determined, and each regional depth image is transformed into the point cloud data to match the real face. Therefore, the point cloud data having the multiple image types are fused, so as to obtain a three-dimensional contour model matching the real face. The generated three-dimensional contour model is shown in FIG. 10. In FIG. 10, the three-dimensional contour model 261 indicates a front face of the three-dimensional contour model, the three-dimensional contour model 262 indicates a right face of the three-dimensional contour model, and the three-dimensional contour model 263 indicates a left face of the three-dimensional contour model. In an embodiment, the regional depth image is transformed into the point cloud data by using a Surfel model.

In an embodiment, the multiple target face images include a first face image having the front face type and a second face image having another image type. Step 2061 further includes: rotating second point cloud data corresponding to each second face image by a posture angle difference between each second face image and the first face image; and fusing each piece of second point cloud data after rotation and first point cloud data corresponding to the first face image, to generate the three-dimensional contour model.

The image type includes the left face type, the right face type, or the head-up type. There is a posture angle difference between the second face image corresponding to another image type and the first face image, and the regional depth images having different image types correspond to different positions in the face. Therefore, to avoid overlap of point cloud data corresponding to different positions, each piece of second point cloud data needs to be rotated, so that a posture angle difference between the rotated point cloud data and the first point cloud data is 0. When each piece of second point cloud data is fused with the first point cloud data, each piece of second point cloud data after rotation is fused with the first point cloud data by superimposing the same pixel points in each second point cloud data and in the first point cloud data, to generate the three-dimensional contour model.

In an embodiment, in the process of fusing multiple pieces of point cloud data, the multiple pieces of point cloud data is fused by using a truncated signed distance function (TSDF). After the three-dimensional contour model is generated, processing such as denoising, downsampling, Poisson reconstruction, and Laplacian smoothing need to be performed on the three-dimensional contour model, to finally obtain a complete three-dimensional contour model.

In step 2062, color texture features of the regional face images are extracted from the multiple target face images.

Because each target face image includes multiple pixels, and each pixel has a corresponding color feature, color features of the multiple pixels in each regional face image are extracted. The color features of the multiple pixels serve as the color texture features. In an embodiment, the color texture features are extracted from the regional face image by using algorithms such as a Local binary patterns (LBP) algorithm and a gray-level co-occurrence matrix algorithm.

In step 2063, the color texture features of the regional face images are fused with the three-dimensional contour model, to generate the three-dimensional face model.

The color texture features of the regional face images are fused with the three-dimensional contour model, so that a corresponding color texture feature is displayed in each region on the three-dimensional contour model, thereby generating the three-dimensional face model.

In a possible implementation, step 2063 includes: determining a region corresponding to each regional face image in the three-dimensional contour model; and respectively fusing the color texture features of the regional face images into surfaces of corresponding regions in the three-dimensional contour model, to generate the three-dimensional face model.

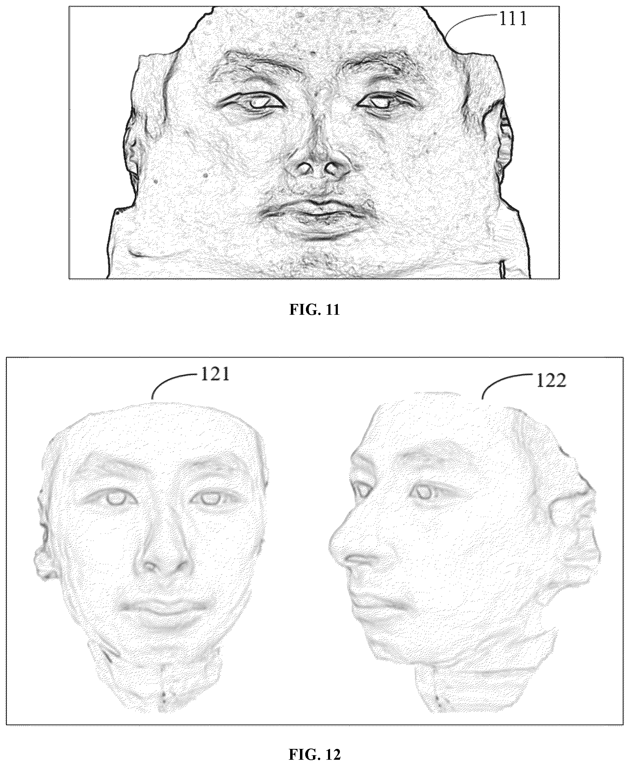

In addition, step 2063 further includes: fusing the color texture features of the regional face images, to obtain an unfolded image of the color texture feature of the face, and inputting the unfolded image of the color texture feature and the three-dimensional contour model into a rendering engine for rendering, to obtain the three-dimensional face model. FIG. 11 shows an unfolded image 111 of the color texture feature of the face. A three-dimensional face model after being rendered is shown in FIG. 12. The three-dimensional face model 121 indicates a front face image, and the three-dimensional face model 122 indicates a left face image.

In the method provided in the embodiment of the present disclosure, g a regional face image that is in each target face image and that matches an image type of the target face image is obtained, face images of other regions in the target face image are cropped, so that each obtained regional face image and a corresponding regional depth image include only a region matching the image type of the target face image, not including a region matching another image type, and thus an overlapping region between different regional face images is reduced. Fusion is performed on the obtained multiple regional face images and the obtained multiple regional depth images, so that a calculation amount is small in a process of generating a three-dimensional face model, thereby improving the efficiency of constructing the three-dimensional face model.

The multiple target face images include a face image of a head-up type, so that the generated three-dimensional face model can include a chin region and a neck region of a face, thereby improving the integrity of the generated three-dimensional face model.

In addition, multiple target face images are selected from the obtained multiple face images, the number of face images required to construct the three-dimensional face model is reduced, so that when the multiple target face images are subsequently transmitted, the transmission efficiency of the face images is improved. Furthermore, because the number of face images that need to be processed is reduced through selecting, the calculation amount for processing is reduced, thereby improving the efficiency of constructing the three-dimensional face model.

In addition, by determining eye statuses of the obtained multiple face images, face images in an unblinking state are selected, so that the number of face images obtained after being selected is reduced, so that the calculation amount in the process of generating the three-dimensional face model by using the selected face images is reduced. In addition, because the face images in the unblinking state include more eye information, the integrity of the three-dimensional face model generated based on the face images in the unblinking state can be improved.

This embodiment of the present disclosure is described by determining the target face image by classifying the obtained multiple face images into the multiple image sequences. In another embodiment, it is unnecessary to perform steps 201 to 203. The obtained multiple face images and the multiple corresponding depth images directly serve as the multiple target face images and the corresponding multiple depth images. Alternatively, multiple target faces and multiple corresponding depth images transmitted by another device are obtained.

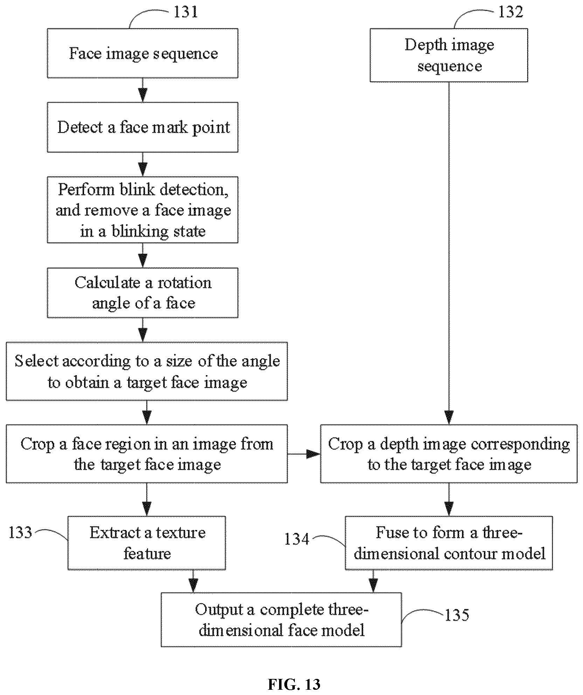

FIG. 13 is a flowchart of a method for generating a three-dimensional face model according to an embodiment of the present disclosure. The process includes the following steps 1 to 9.

In step 1, a computer device captures face images by using a depth camera to obtain a face image sequence and a corresponding depth image sequence.

In step 2, mark point detection is performed on the face images in the face image sequence, to determine mark points of the face images.

In step 3, the face images in a blinking state are removed from the face image sequence according to coordinates of face mark points in eye regions of the face images, to obtain a new face image sequence.

In step 4, a front face image is determined according to face mark points included in each face image in the new face image sequence, and a rotation angle of a face in each face image is determined according to coordinates of the face mark points in the front face image and coordinates of face mark points in other face images.

In step 5, the face images in the new face image sequence are classified into multiple image sequences according to a size of an angle corresponding to each face image, different image sequences matching different image types.

In step 6, a face image with the largest angle is selected from the image sequences according to the size of the angle, to obtain a target face image.

In step 7, a face region having an image type of the target face image is cropped from the target face image, and a corresponding depth region is cropped from a corresponding depth image.

In step 8, a texture feature of the face region is extracted, and multiple depth regions are fused, to obtain a three-dimensional contour model.

In step 9, the texture feature of the face region is fused into the three-dimensional contour model, to output a complete three-dimensional face model.

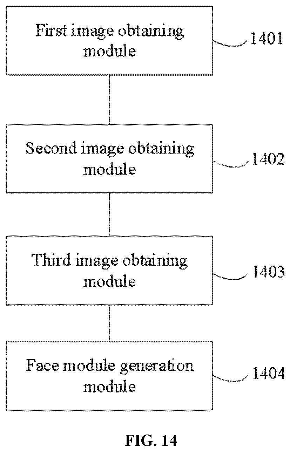

FIG. 14 is a schematic structural diagram of an apparatus for generating a three-dimensional face model according to an embodiment of the present disclosure. As shown in FIG. 14, the apparatus includes: a first image obtaining module 1401, a second image obtaining module 1402, a third image obtaining module 1403 and a face model generation module 1404.

The first image obtaining module 1401 is configured to obtain multiple target face images and multiple depth images corresponding to the multiple target face images. The multiple target face images include a same face, and the multiple depth images include depth information of pixels in the target face images.

The second image obtaining module 1402 is configured to obtain, according to an image type pf each target face image, a regional face image that is in the target face image and that matches the image type of the target face image. The image type includes a front face, a left face, a right face, or a head-up.

The third image obtaining module 1403 is configured to obtain a regional depth image in a corresponding depth image according to the regional face image in each target face image. A position of the regional face image matches a position of the regional depth image.

The face model generation module 1404 is configured to perform fusion on the obtained multiple regional face images and the multiple regional depth images, to generate a three-dimensional face model.

With the apparatus provided in the embodiment of the present disclosure, the obtained multiple target face images and the regional depth images are cropped, so that each obtained regional face image and a corresponding regional depth image include only a region matching the image type of the target face image, not including a region matching another image type, and thus an overlapping region between different regional face images is reduced. Fusion is performed on the obtained multiple regional face images and the multiple regional depth images, and a calculation amount is small in a process of generating a three-dimensional face model, thereby improving the efficiency of constructing the three-dimensional face model.

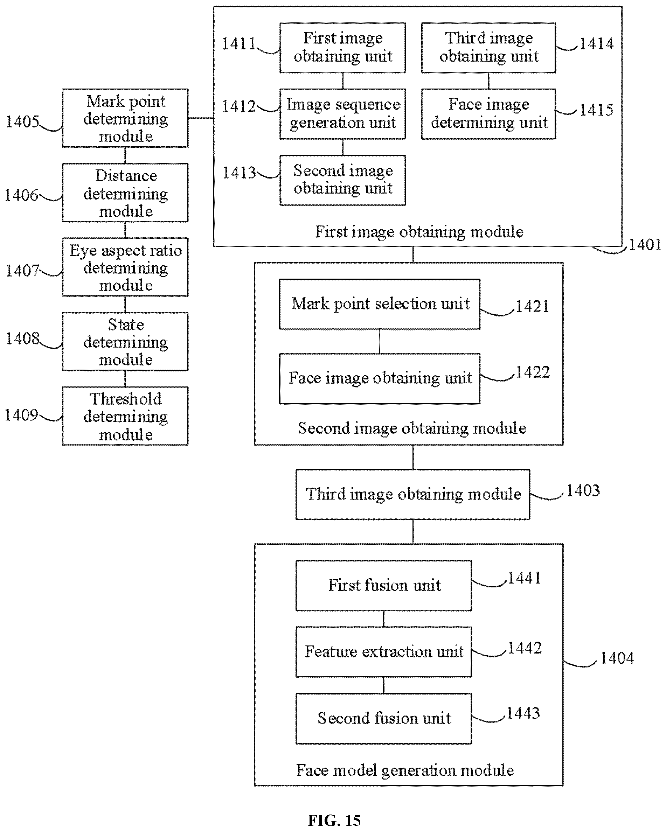

In an embodiment, as shown in FIG. 15, the second image obtaining module 1402 includes: a mark point selection unit 1421 and a face image obtaining unit 1422.

The mark point selection unit 1421 is configured to select, from multiple mark points in any target face image, at least one first mark point matching an image type of the target face image.

The face image obtaining unit 1422 is configured to obtain a regional face image formed by the at least one first mark point from the target face image.

In an embodiment, as shown in FIG. 15, the image obtaining module 1401 includes: a first image obtaining unit 1411, an image sequence generation unit 1412 and a second image obtaining unit 1413.

The first image obtaining unit 1411 is configured to obtain multiple face images and multiple depth images corresponding to the multiple face images. The multiple face images include the face.

The image sequence generation unit 1412 is configured to classify the multiple face images according to image types, to obtain multiple image sequences. Each image sequence includes face images of a same image type.

The second image obtaining unit 1413 is configured to select a target face image from each image sequence, to obtain the multiple target face images, and obtain the depth images corresponding to the multiple target face images.

In an embodiment, the multiple image sequences include at least a first image sequence having the front face type and a second image sequence having other image type. The second image obtaining unit 1413 is further configured to select a first face image from the first image sequence as the target face image; obtain a posture angle difference between each second face image in each second image sequence and the first face image; and select a second face image with a largest posture angle difference from each second image sequence as the target face image.

In an embodiment, the second image obtaining unit 1413 is further configured to determine, for any second face image, at least one second mark point in the second face image and at least one second mark point in the first face image that have a same serial number; obtain a rotation and translation matrix for the first face image and the second face image according to coordinates of the at least one second mark point in the first face image and coordinates of the at least one second mark point in the second face image; and transform the rotation and translation matrix, to obtain a posture angle difference between the second face image and the first face image.

In an embodiment, as shown in FIG. 15, the first image obtaining module 1401 includes: a third image obtaining unit 1414 and a face image determining unit 1415.

The third image obtaining unit 1414 is configured to obtain multiple face images and multiple depth images corresponding to the multiple face images. The plurality of face images include the face.

The face image determining unit 1415 is configured to determine a face image in an unblinking state in the multiple face images as the target face image according to an eye status of the face image. The eye status includes a blinking state or the unblinking state.

In an embodiment, as shown in FIG. 15, the apparatus further includes: a mark point determining module 1405, a distance determining module 1406, an eye aspect ratio determining module 1407, and a state determining module 1408.

The mark point determining module 1405 is configured to determine, for any face image, an upper eyelid mark point, a lower eyelid mark point, a left canthus mark point, and a right canthus mark point of a target eye region in the face image.

The distance determining module 1406 is configured to determine a first distance between the upper eyelid mark point and the lower eyelid mark point, and a second distance between the left canthus mark point and the right canthus mark point.

The eye aspect ratio determining module 1407 is configured to determine a ratio of the first distance to the second distance as an eye aspect ratio of the target eye region.

The state determining module 1408 is configured to determine that the face image is in the blinking state if the eye aspect ratio is less than an eye aspect ratio threshold.

The state determining module 1408 is further configured to determine that the face image is in the unblinking state if the eye aspect ratio is not less than the eye aspect ratio threshold.

In an embodiment, as shown in FIG. 15, the apparatus further includes:

a threshold determining module 1409, configured to obtain a mean value of eye aspect ratios corresponding to the multiple face images as the eye aspect ratio threshold.

In an embodiment, as shown in FIG. 15, the face model generation module 1404 includes: a first fusion unit 1441, a feature extraction unit 1442 abd a second fusion unit 1443.

The first fusion unit 1441 is configured to fuse the multiple regional depth images, to obtain a three-dimensional contour model.

The feature extraction unit 1442 is configured to extract color texture features of the regional face images from the multiple target face images.

The second fusion unit 1443 is configured to fuse the color texture features of the regional face images and the three-dimensional contour model, to generate the three-dimensional face model.

In an embodiment, the first fusion unit 1441 is further configured to transform the regional depth images corresponding to the target face images into point cloud data according to focal lengths corresponding to the target face images; and fuse the point cloud data corresponding to the target face images, to obtain the three-dimensional contour model.

In an embodiment, the multiple target face images include a first face image having the front face type and a second face image having other image type. The first fusion unit 1441 is further configured to rotate second point cloud data corresponding to each second face image by a posture angle difference between each second face image and the first face image; and fuse each piece of second point cloud data after rotation and first point cloud data corresponding to the first face image, to generate the three-dimensional contour model.

In an embodiment, the second fusion unit 1443 is further configured to determine a region corresponding to each regional face image in the three-dimensional contour model; and respectively fuse the color texture features of the regional face images into surfaces of corresponding regions in the three-dimensional contour model, to generate the three-dimensional face model.

The division of the foregoing functional modules is merely described for exemplary purposes when the apparatus for generating a three-dimensional face model provided in the foregoing embodiments generates a three-dimensional face model. In actual applications, the functions may be allocated to different functional modules according to specific requirements. That is, the computer device is divided into different functional modules to complete all or some of the foregoing described functions. In addition, the apparatus for generating a three-dimensional face model provided in the foregoing embodiments and the method embodiments for generating a three-dimensional face model share the same conception. For the specific implementation process, one may refer to the method embodiments. Details are not described herein again.

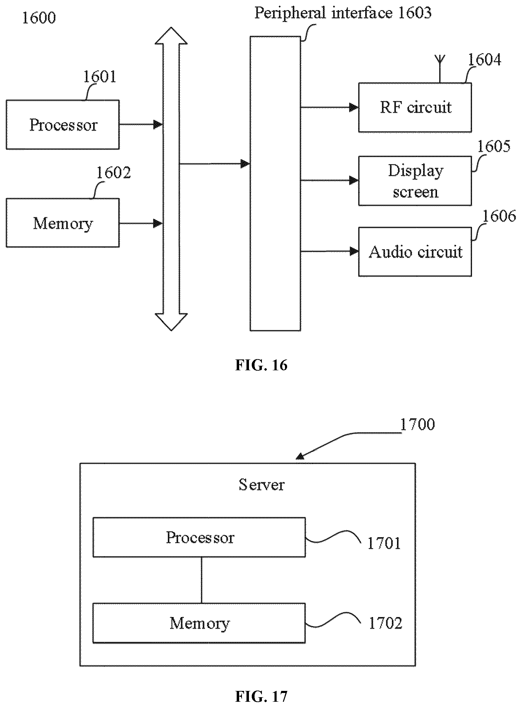

FIG. 16 is a schematic structural diagram of a terminal according to an embodiment of the present disclosure, which can implement the operations performed by the computer device in the foregoing embodiments. In an embodiment, the terminal 1600 is a portable mobile terminal, for example: a smartphone, a tablet computer, a Moving Picture Experts Group Audio Layer III (MP3) player, a Moving Picture Experts Group Audio Layer IV (MP4) player, a notebook computer, a desktop computer, a head-mounted device, a smart television, a smart speaker, a smart remote control, a smart microphone, or any another smart terminal. The terminal 1600 may also be referred to as a user equipment, a portable terminal, a laptop terminal, a desktop terminal, or another name.

Generally, the terminal 1600 includes a processor 1601 and a memory 1602.

The processor 1601 may include one or more processing cores, and may be, for example, a 4-core processor or an 8-core processor. The memory 1602 may include one or more computer-readable storage media, the one or more computer-readable storage media may be non-transient, and configured to store at least one computer program. The at least one computer program is stored in the processor 1601 to implement the method for generating a three-dimensional face model provided in the method embodiments of the present disclosure.

In some embodiments, the terminal 1600 may further include: a peripheral interface 1603 and at least one peripheral. The processor 1601, the memory 1602, and the peripheral interface 1603 may be connected via a bus or a signal cable. Each peripheral device may be connected to the peripheral interface 1603 via a bus, a signal cable, or a circuit board. In an embodiment, the peripheral device includes: at least one of a radio frequency (RF) circuit 1604, a display screen 1605, and an audio circuit 1606.

The RF circuit 1604 is configured to receive and transmit an RF (Radio Frequency) signal, also referred to as an electromagnetic signal. The radio frequency circuit 1604 communicates with a communication network and another communication device by using the electromagnetic signal.

The display screen 1605 is configured to display a UI (user interface). The UI may include a graphic, text, an icon, a video, and any combination thereof. The display screen 1605 may be a touch display screen. The display screen 1605 may be further configured to provide a virtual button and/or a virtual keyboard.

The audio circuit 1606 may include a microphone and a loudspeaker. The microphone is configured to acquire sound audio signals of a user and an environment, and convert the audio signals into electrical signals and input the electrical signals into the processor 1601 for processing, or input the electrical signals into the RF circuit 1604 to implement speech communication. For a purpose of stereo acquisition or noise reduction, there may be multiple microphones arranged at different portions of the terminal 1600 respectively. The microphone may be an array microphone or an omni-directional collection type microphone. The speaker is configured to convert electrical signals from the processor 1601 or the RF circuit 1604 into audio signals.

A person skilled in the art may understand that a structure shown in FIG. 16 constitutes no limitation on the terminal 1600, and the terminal may include more or fewer components than those shown in the figure, or some components may be combined, or the components may be arranged in different manners.

FIG. 17 is a schematic structural diagram of a server according to an embodiment of the present disclosure. The server 1700 may vary greatly due to different configurations or performance, and may include one or more processors (such as central processing units (CPUs)) 1701 and one or more memories 1702. The memory 1702 stores at least one computer program, the at least one computer program being loaded and executed by the processor 1701 to implement the methods provided in the foregoing method embodiments. Certainly, the server may have a wired or wireless network interface, a keyboard, an input/output interface and other components to facilitate input/output. The server may further include other components for implementing device functions. Details are not described herein again.

The server 1700 may be configured to perform the steps performed by the computer device in the method for generating a three-dimensional face model provided in the foregoing embodiments.

According to embodiments of the present disclosure, a computer device is further provided, including a processor and a memory. The memory storing at least one computer program, and the at least one computer program is loaded and executed by the processor to implement the following operations in the method for generating a three-dimensional face model:

obtaining multiple target face images and multiple depth images corresponding to the multiple target face images, the multiple target face images including a same face, and the multiple depth images including depth information of pixels in the target face images;

obtaining, according to an image type of each target face image, a regional face image that is in the target face image and that matches the image type of the target face image, the image type including a front face, a left face, a right face, or a head-up;

obtaining a regional depth image in a corresponding depth image according to the regional face image in each target face image, a position of the regional face image matching a position of the regional depth image; and

performing fusion on the obtained multiple regional face images and multiple regional depth images, to generate a three-dimensional face model.

In an embodiment, the at least one computer program is loaded and executed by the processor to implement the following operations:

selecting, from multiple mark points in any target face image, at least one first mark point matching an image type of the target face image; and

obtaining a regional face image formed by the at least one first mark point from the target face image.

In an embodiment, the at least one computer program is loaded and executed by the processor to implement the following operations:

obtaining multiple face images and multiple depth images corresponding to the multiple face images, the multiple face images including the face;

classifying the multiple face images according to image types of the multiple face images, to obtain multiple image sequences, each image sequence including face images of a same image type; and

selecting a target face image from each image sequence, to obtain multiple target face images, and obtaining depth images corresponding to the multiple target face images.

In an embodiment, the multiple image sequences include at least a first image sequence having the front face type and a second image sequence having other image type. The at least one computer program code is loaded and executed by the processor to implement the following operations:

selecting a first face image from the first image sequence as the target face image;

obtaining a posture angle difference between each second face image in each second image sequence and the first face image; and

selecting a second face image with a largest posture angle difference from each second image sequence as the target face image.

In an embodiment, the at least one computer program is loaded and executed by the processor to implement the following operations:

determining, for any second face image, at least one second mark point in the second face image and at least one second mark point in the first face image that have a same serial number;

obtaining a rotation and translation matrix for the first face image and the second face image according to coordinates of the at least one second mark point in the first face image and coordinates of the at least one second mark point in the second face image; and

transforming the rotation and translation matrix, to obtain a posture angle difference between the second face image and the first face image.

In an embodiment, the at least one computer program is loaded and executed by the processor to implement the following operations:

obtaining multiple face images and multiple depth images corresponding to the multiple face images, the plurality of face images including the face;

determining a face image in an unblinking state in the multiple face images as the target face image according to an eye status of the face image, the eye status including a blinking state or the unblinking state.

In an embodiment, the at least one computer program is loaded and executed by the processor to implement the following operations:

determining, for any face image, an upper eyelid mark point, a lower eyelid mark point, a left canthus mark point, and a right canthus mark point of a target eye region in the face image;

determining a first distance between the upper eyelid mark point and the lower eyelid mark point, and a second distance between the left canthus mark point and the right canthus mark point;

determining a ratio of the first distance to the second distance as an eye aspect ratio of the target eye region;

determining that the face image is in the blinking state if the eye aspect ratio is less than an eye aspect ratio threshold; and

determining that the face image is in the unblinking state if the eye aspect ratio is not less than the eye aspect ratio threshold.

In an embodiment, the at least one computer program is loaded and executed by the processor to implement the following operations:
obtaining a mean value of eye aspect ratios corresponding to the multiple face images as the eye aspect ratio threshold.
In an embodiment, the at least one computer program is loaded and executed by the processor to implement the following operations:

fusing the multiple regional depth images, to obtain a three-dimensional contour model;

extracting color texture features of the regional face images from the multiple target face images; and

fusing the color texture features of the regional face images and the three-dimensional contour model, to generate the three-dimensional face model.

In an embodiment, the at least one computer program is loaded and executed by the processor to implement the following operations:

transforming the regional depth images corresponding to the target face images into point cloud data according to focal lengths corresponding to the target face images; and
fusing the point cloud data corresponding to the target face images, to obtain the three-dimensional contour model.

In an embodiment, the multiple target face images include a first face image having the front face type and a second face image having other image type. The at least one computer program code is loaded and executed by the processor to implement the following operations:

rotating second point cloud data corresponding to each second face image by a posture angle difference between each second face image and the first face image; and

fusing each piece of second point cloud data after rotation and first point cloud data corresponding to the first face image, to generate the three-dimensional contour model.

In an embodiment, the at least one computer program is loaded and executed by the processor to implement the following operations:

determining a region corresponding to each regional face image in the three-dimensional contour model; and

respectively fusing the color texture features of the regional face images into surfaces of corresponding regions in the three-dimensional contour model, to generate the three-dimensional face model.

According to embodiments of the present disclosure, a computer-readable storage medium storing at least one computer program is further provided. The at least one computer program is loaded and executed by a processor to implement the following operations in the method for generating a three-dimensional face model:

obtaining multiple target face images and multiple depth images corresponding to the multiple target face images, the multiple target face images including a same face, and the multiple depth images including depth information of pixels in the target face images;

obtaining, according to an image type of each target face image, a regional face image that is in the target face image and that matches the image type of the target face image, the image type including a front face, a left face, a right face, or a head-up;

obtaining a regional depth image in a corresponding depth image according to the regional face image in each target face image, a position of the regional face image matching a position of the regional depth image; and

performing fusion on the obtained multiple regional face images and multiple regional depth images, to generate a three-dimensional face model of a face.

In an embodiment, the at least one computer program is loaded and executed by the processor to implement the following operations:

selecting, from multiple mark points in any target face image, at least one first mark point matching an image type of the target face image; and

obtaining a regional face image formed by the at least one first mark point from the target face image.

In an embodiment, the at least one computer program is loaded and executed by the processor to implement the following operations:

obtaining multiple face images and multiple depth images corresponding to the multiple face images, the multiple face images including the face;

classifying the multiple face images according to image types of the multiple face images, to obtain multiple image sequences, each image sequence including face images of a same image type; and

selecting a target face image from each image sequence, to obtain multiple target face images, and obtaining the depth images corresponding to the multiple target face images.

In an embodiment, the multiple image sequences include at least a first image sequence having the front face type and a second image sequence having other image type. The at least one computer program code is loaded and executed by the processor to implement the following operations:

selecting a first face image from the first image sequence as the target face image;

obtaining a posture angle difference between each second face image in each second image sequence and the first face image; and

selecting a second face image with a largest posture angle difference from each second image sequence as the target face image.

In an embodiment, the at least one computer program is loaded and executed by the processor to implement the following operations:

determining, for any second face image, at least one second mark point in the second face image and at least one second mark point in the first face image that have a same serial number;

obtaining a rotation and translation matrix for the first face image and the second face image according to coordinates of the at least one second mark point in the first face image and coordinates of the at least one second mark point in the second face image; and

transforming the rotation and translation matrix, to obtain a posture angle difference between the second face image and the first face image.

In an embodiment, the at least one computer program is loaded and executed by the processor to implement the following operations:

obtaining multiple face images and multiple depth images corresponding to the multiple face images, the multiple face images including the face;
determining a face image in an unblinking state in the multiple face images as the target face image according to an eye status of the face image, the eye status including a blinking state or the unblinking state.

In an embodiment, the at least one computer program is loaded and executed by the processor to implement the following operations:

determining, for any face image, an upper eyelid mark point, a lower eyelid mark point, a left canthus mark point, and a right canthus mark point of a target eye region in the face image;

determining a first distance between the upper eyelid mark point and the lower eyelid mark point, and a second distance between the left canthus mark point and the right canthus mark point;

determining a ratio of the first distance to the second distance as an eye aspect ratio of the target eye region;

determining that the face image is in the blinking state if the eye aspect ratio is less than an eye aspect ratio threshold; and

determining that the face image is in the unblinking state if the eye aspect ratio is not less than the eye aspect ratio threshold.

In an embodiment, the at least one computer program is loaded and executed by the processor to implement the following operations:
obtaining a mean value of eye aspect ratios corresponding to the multiple face images as an eye aspect ratio threshold.
In an embodiment, the at least one computer program is loaded and executed by the processor to implement the following operations:

fusing the multiple regional depth images, to obtain a three-dimensional contour model;

extracting color texture features of the regional face images from the multiple target face images; and

fusing the color texture features of the regional face images and the three-dimensional contour model, to generate the three-dimensional face model.

In an embodiment, the at least one computer program is loaded and executed by the processor to implement the following operations:

transforming the regional depth images corresponding to the target face images into point cloud data according to focal lengths corresponding to the target face images; and

fusing the point cloud data corresponding to the target face images, to obtain the three-dimensional contour model.

In an embodiment, the multiple target face images include a first face image having the front face type and a second face image having other image type. The at least one computer program code is loaded and executed by the processor to implement the following operations:

rotating second point cloud data corresponding to each second face image by a posture angle difference between each second face image and the first face image; and

fusing each piece of second point cloud data after rotation and first point cloud data corresponding to the first face image, to generate the three-dimensional contour model.

In an embodiment, the at least one computer program is loaded and executed by the processor to implement the following operations:

determining a region corresponding to each regional face image in the three-dimensional contour model; and

respectively fusing the color texture features of the regional face images into surfaces of corresponding regions in the three-dimensional contour model, to generate the three-dimensional face model.

According to embodiments of the present disclosure, a computer program product or a computer program is further provided, the computer program product or the computer program including computer program code, the computer program code being stored in a computer-readable storage medium, a processor of a computer device reading the computer program code from the computer-readable storage medium, and the processor executing the computer program code to implement the following operations in the method for generating a three-dimensional face model:

obtaining multiple target face images and multiple depth images corresponding to the multiple target face images, the multiple target face images including a same face, and the multiple depth images including depth information corresponding to pixels in the target face images;

obtaining, according to an image type of each target face image, a regional face image that is in the target face image and that matches the image type of the target face image, the image type including a front face, a left face, a right face, or a head-up;

obtaining a regional depth image in a corresponding depth image according to the regional face image in each target face image, a position of the regional face image matching a position of the regional depth image; and

performing fusion on the obtained multiple regional face images and multiple regional depth images, to generate a three-dimensional face model of a face.

In an embodiment, the at least one computer program code is loaded and executed by the processor to implement the following operations:

selecting, from multiple mark points in any target face image, at least one first mark point matching an image type of the target face image; and

obtaining a regional face image formed by the at least one first mark point from the target face image.

In an embodiment, the at least one computer program code is loaded and executed by the processor to implement the following operations:

obtaining multiple face images and multiple depth images corresponding to the multiple face images, the multiple face images including the face;

classifying the multiple face images according to image types of the multiple face images, to obtain multiple image sequences, each image sequence including face images of a same image type; and

selecting a target face image from each image sequence, to obtain the multiple target face images, and obtaining the depth images corresponding to the multiple target face images.

In an embodiment, the multiple image sequences include at least a first image sequence having the front face type and a second image sequence having other image type. The at least one computer program code is loaded and executed by the processor to implement the following operations:

selecting a first face image from the first image sequence as the target face image;

EP 4 002 290 A1

obtaining a posture angle difference between each second face image in each second image sequence and the first face image; and

selecting a second face image with a largest posture angle difference from each second image sequence as the target face image.

In an embodiment, the at least one computer program code is loaded and executed by the processor to implement the following operations:

determining, for any second face image, at least one second mark point in the second face image and at least one second mark point in the first face image that have a same serial number;

obtaining a rotation and translation matrix for the first face image and the second face image according to coordinates of the at least one second mark point in the first face image and coordinates of the at least one second mark point in the second face image; and

transforming the rotation and translation matrix, to obtain a posture angle difference between the second face image and the first face image.

In an embodiment, the at least one computer program code is loaded and executed by the processor to implement the following operations:

obtaining multiple face images and multiple depth images corresponding to the multiple face images, the multiple face images including the face;
determining a face image in an unblinking state in the multiple face images as the target face image according to an eye status of the face image, the eye status including a blinking state or the unblinking state.

In an embodiment, the at least one computer program code is loaded and executed by the processor to implement the following operations:

determining, for any face image, an upper eyelid mark point, a lower eyelid mark point, a left canthus mark point, and a right canthus mark point of a target eye region in the face image;

determining a first distance between the upper eyelid mark point and the lower eyelid mark point, and a second distance between the left canthus mark point and the right canthus mark point;

determining a ratio of the first distance to the second distance as an eye aspect ratio of the target eye region;

determining that the face image is in the blinking state if the eye aspect ratio is less than an eye aspect ratio threshold; and

determining that the face image is in the unblinking state if the eye aspect ratio is not less than the eye aspect ratio threshold.

In an embodiment, the at least one computer program code is loaded and executed by the processor to implement the following operations:
obtaining a mean value of eye aspect ratios corresponding to the multiple face images as the eye aspect ratio threshold.
In an embodiment, the at least one computer program code is loaded and executed by the processor to implement the following operations:

fusing the multiple regional depth images, to obtain a three-dimensional contour model;

extracting color texture features of the regional face images from the multiple target face images; and

fusing the color texture features of the regional face images and the three-dimensional contour model, to generate the three-dimensional face model.

In an embodiment, the at least one computer program code is loaded and executed by the processor to implement

22

the following operations:

transforming the regional depth images corresponding to the target face images into point cloud data according to focal lengths corresponding to the target face images; and

fusing the point cloud data corresponding to the target face images, to obtain the three-dimensional contour model.

In an embodiment, the multiple target face images include a first face image having the front face type and a second face image having other image type. The at least one computer program code is loaded and executed by the processor to implement the following operations:

rotating second point cloud data corresponding to each second face image by a posture angle difference between each second face image and the first face image; and

fusing each piece of second point cloud data after rotation and first point cloud data corresponding to the first face image, to generate the three-dimensional contour model.

In an embodiment, the at least one computer program code is loaded and executed by the processor to implement the following operations:

determining a region corresponding to each regional face image in the three-dimensional contour model; and

respectively fusing the color texture features of the regional face images into surfaces of corresponding regions in the three-dimensional contour model, to generate the three-dimensional face model.

A person of ordinary skill in the art may understand that all or some of the steps of the foregoing embodiments may be implemented by hardware, or may be implemented by a program instructing related hardware. The program may be stored on a computer-readable storage medium. The storage medium may be a ROM, a magnetic disk, or an optical disc.

The foregoing descriptions are merely some embodiments of the embodiments of the present disclosure, but are not intended to limit the present disclosure. Any modification, equivalent replacement, or improvement made within the spirit and principle of the embodiments of the present disclosure shall fall within the protection scope of the present disclosure.

**Claims**

1. A method for generating a three-dimensional face model, executable by a computer device, the method comprising:

obtaining a plurality of target face images and a plurality of depth images corresponding to the plurality of target face images, wherein the plurality of target face images each comprise a same face with a different orientation, and the plurality of depth images comprise depth information of pixels in the target face images;
obtaining, according to an image type of each of the plurality of target face images, a regional face image that is in the corresponding target face image and that matches the image type of the corresponding target face image, wherein the image type comprises a front face, a left face, a right face, or a head-up;
obtaining a regional depth image in a corresponding depth image according to the regional face image in each of the plurality of target face images, wherein a position of the regional face image matches a position of the regional depth image; and
performing fusion on the obtained plurality of regional face images and plurality of regional depth images, to generate a three-dimensional face model.

2. The method according to claim 1, wherein the obtaining, according to an image type of each of the plurality of target face images, a regional face image that is in the corresponding target face image and that matches the image type of the corresponding target face image comprises:

selecting, from a plurality of mark points in any target face image, at least one first mark point matching an image type of the corresponding target face image; and
obtaining a regional face image formed by the at least one first mark point from the corresponding target face image.

3. The method according to claim 1, wherein the obtaining a plurality of target face images and a plurality of depth images corresponding to the plurality of target face images comprises:

obtaining a plurality of face images and a plurality of depth images corresponding to the plurality of face images, the plurality of face images comprising the face;
classifying the plurality of face images according to image types, to obtain a plurality of image sequences, wherein each of the plurality of image sequences comprises face images of a same image type; and
selecting a target face image from each image sequence, to obtain the plurality of target face images, and obtaining the depth images corresponding to the plurality of target face images.

4. The method according to claim 3, wherein the plurality of image sequences comprise at least a first image sequence having the front face type and a second image sequence having other image type, and wherein the selecting a target face image from each image sequence, to obtain the plurality of target face images comprises:

selecting a first face image from the first image sequence as the target face image;
obtaining a posture angle difference between each second face image in each second image sequence and the first face image; and
selecting a second face image with a largest posture angle difference from each second image sequence as the target face image.

5. The method according to claim 4, wherein the obtaining a posture angle difference between each second face image in each second image sequence and the first face image comprises:

determining, for any second face image, at least one second mark point in the second face image and at least one second mark point in the first face image that have a same serial number;
obtaining a rotation and translation matrix for the first face image and the second face image according to coordinates of the at least one second mark point in the first face image and coordinates of the at least one second mark point in the second face image; and
transforming the rotation and translation matrix, to obtain a posture angle difference between the second face image and the first face image.

6. The method according to claim 1, wherein the obtaining a plurality of target face images and a plurality of depth images corresponding to the plurality of target face images comprises:

obtaining a plurality of face images and a plurality of depth images corresponding to the plurality of face images, wherein the plurality of face images comprise the face; and
determining a face image in an unblinking state in the plurality of face images as the target face image according to an eye status of the face image, wherein the eye status comprises a blinking state or the unblinking state.

7. The method according to claim 6, wherein before the determining a face image in an unblinking state in the plurality of face images as the target face image according to an eye status of the face image, the method further comprises:

determining, for any face image, an upper eyelid mark point, a lower eyelid mark point, a left canthus mark point, and a right canthus mark point of a target eye region in the face image;
determining a first distance between the upper eyelid mark point and the lower eyelid mark point, and a second distance between the left canthus mark point and the right canthus mark point;
determining a ratio of the first distance to the second distance as an eye aspect ratio of the target eye region;
determining that the face image is in the blinking state if the eye aspect ratio is less than an eye aspect ratio threshold; and
determining that the face image is in the unblinking state if the eye aspect ratio is not less than the eye aspect ratio threshold.

8. The method according to claim 7, further comprising:
obtaining a mean value of eye aspect ratios of the plurality of face images as the eye aspect ratio threshold.

9. The method according to claim 1, wherein the performing fusion on the obtained plurality of regional face images and plurality of regional depth images, to generate a three-dimensional face model comprises:

fusing the plurality of regional depth images, to obtain a three-dimensional contour model;
extracting color texture features of the regional face images from the plurality of target face images; and
fusing the color texture features of the regional face images and the three-dimensional contour model, to generate the three-dimensional face model.

10. The method according to claim 9, wherein the fusing the plurality of regional depth images, to obtain a three-dimensional contour model comprises:

transforming the regional depth images corresponding to the target face images into point cloud data according to focal lengths of the target face images; and
fusing the point cloud data corresponding to the target face images, to obtain the three-dimensional contour model.

11. The method according to claim 10, wherein the plurality of target face images comprise a first face image having the front face type and a second face image having other image type, and the fusing the point cloud data corresponding to the target face images, to obtain the three-dimensional contour model comprises:

rotating second point cloud data corresponding to each second face image by a posture angle difference between the second face image and the first face image; and
fusing each piece of second point cloud data after rotation and first point cloud data corresponding to the first face image, to generate the three-dimensional contour model.

12. The method according to claim 9, wherein the fusing the color texture features of the regional face images and the three-dimensional contour model, to generate the three-dimensional face model comprises:

determining a region corresponding to each regional face image in the three-dimensional contour model; and
fusing the color texture features of the regional face images into surfaces of corresponding regions in the three-dimensional contour model, to generate the three-dimensional face model.

13. An apparatus for generating a three-dimensional face model, comprising:

a first image obtaining module, configured to obtain a plurality of target face images and a plurality of depth images corresponding to the plurality of target face images, wherein the plurality of target face images each comprise a same face with a different orientation, and the plurality of depth images comprise depth information of pixels in the target face images;
a second image obtaining module, configured to obtain, according to an image type of each of the plurality of target face images, a regional face image that is in the corresponding target face image and that matches the image type of the corresponding target face image, wherein the image type comprises a front face, a left face, a right face, or a head-up;
a third image obtaining module, configured to obtain a regional depth image in a corresponding depth image according to the regional face image in each of the plurality of target face images, wherein a position of the regional face image matches a position of the regional depth image; and
a face model generation module, configured to perform fusion on the obtained plurality of regional face images and plurality of regional depth images, to generate a three-dimensional face model.

14. A computer device, comprising a processor and a memory, wherein the memory stores at least one computer program, the at least one computer program is loaded and executed by the processor to implement the method for generating a three-dimensional face model according to any one of claims 1 to 12.

15. A computer-readable storage medium, storing at least one computer program, wherein the computer program is loaded and executed by a processor to implement the method for generating a three-dimensional face model according to any one of claims 1 to 12.

**FIG. 1**

| A computer device obtains a plurality of face images and a plurality of corresponding depth images | 201 |
| The computer device classifies the plurality of face images according to image types of the plurality of face images, to obtain a plurality of image sequences | 202 |
| The computer device selects a target face image from each image sequence, to obtain a plurality of target face images, and obtains depth images corresponding to the plurality of target face images | 203 |
| The computer device obtains, according to an image type of each target face image, a regional face image that is in the target face image and that matches the image type of the target face image | 204 |
| The computer device obtains a regional depth image in a corresponding depth image according to the regional face image in each target face image | 205 |
| The computer device performs fusion on the obtained plurality of regional face images and plurality of regional depth images, to generate a three-dimensional face model | 206 |

**FIG. 2**

FIG. 3

FIG. 4

**FIG. 5**

**FIG. 6**

Select a first face image from a first image sequence as a target face image — 2031

Obtain a posture angle difference between each second face image in each second image sequence and the first face image — 2032

Select a second face image with a largest posture angle difference from each second image sequence as the target face image — 2033

**FIG. 7**

FIG. 8

| Fuse the plurality of regional depth images, to obtain a three-dimensional contour model | 2061 |
| --- | --- |
| Extract color texture features of the regional face images from the plurality of target face images | 2062 |
| Fuse the color texture features of the regional face images and the three-dimensional contour model, to generate the three-dimensional face model | 2063 |

FIG. 9

FIG. 10

**FIG. 11**

**FIG. 12**

131

Face image sequence

↓

Detect a face mark point

↓

Perform blink detection, and remove a face image in a blinking state

↓

Calculate a rotation angle of a face

↓

Select according to a size of the angle to obtain a target face image

↓

Crop a face region in an image from the target face image

132

Depth image sequence

133 — Extract a texture feature

→ Crop a depth image corresponding to the target face image

↓

134 — Fuse to form a three-dimensional contour model

↓

Output a complete three-dimensional face model — 135

**FIG. 13**

First image obtaining
module 1401

Second image obtaining
module 1402

Third image obtaining
module 1403

Face module generation
module 1404

**FIG. 14**

Mark point
determining
module — 1405

Distance
determining
module — 1406

Eye aspect ratio
determining
module — 1407

State
determining
module — 1408

Threshold
determining
module — 1409

1411 — First image obtaining unit

Third image obtaining unit — 1414

1412 — Image sequence generation unit

Face image determining unit — 1415

1413 — Second image obtaining unit

First image obtaining module — 1401

Mark point selection unit — 1421

Face image obtaining unit — 1422

Second image obtaining module

Third image obtaining module — 1403

First fusion unit — 1441

Feature extraction unit — 1442

Second fusion unit — 1443

1404

Face model generation module

**FIG. 15**

1600

Peripheral interface 1603

1601

1604

Processor

RF circuit

1602

1605

Memory

Display screen

1606

Audio circuit

**FIG. 16**

1700

Server

Processor 1701

Memory 1702

**FIG. 17**

## INTERNATIONAL SEARCH REPORT

| International application No. |
|---|
| **PCT/CN2020/125386** |

**A.    CLASSIFICATION OF SUBJECT MATTER**

G06T 17/00(2006.01)i

According to International Patent Classification (IPC) or to both national classification and IPC

**B.    FIELDS SEARCHED**

Minimum documentation searched (classification system followed by classification symbols)

G06T

Documentation searched other than minimum documentation to the extent that such documents are included in the fields searched

Electronic data base consulted during the international search (name of data base and, where practicable, search terms used)

WPI, EPODOC, CNPAT, CNKI, IEEE: 建模, 方向, 标志点, 兴趣点, 模型, 深度图, 深度信息, 深度, 特征点, 旋转, 三维, 角度, 生成, "3d", 朝向, 人脸, 视角, 姿态, model, direction, characteristic, feature, point, depth, rotate, angle

**C.    DOCUMENTS CONSIDERED TO BE RELEVANT**

| Category* | Citation of document, with indication, where appropriate, of the relevant passages | Relevant to claim No. |
|---|---|---|
| PX | CN 111210510 A (TENCENT TECHNOLOGY SHENZHEN CO., LTD.) 29 May 2020 (2020-05-29)<br>    claims 1-15 | 1-15 |
| Y | CN 110378994 A (GUANGDONG OPPO MOBILE TELECOMMUNICATIONS CORP., LTD.) 25 October 2019 (2019-10-25)<br>    description, paragraphs 0039-0085, 0123-0161, figures 3-5 | 1-15 |
| Y | CN 110363858 A (XTOP 3D TECHNOLOGY (SHANGHAI) CO., LTD.) 22 October 2019 (2019-10-22)<br>    description, paragraphs 0036-0044 | 1-15 |
| Y | CN 103778661 A (SHENZHEN INSTITUTES OF ADVANCED TECHNOLOGY, CHINESE ACADEMY OF SCIENCES et al.) 07 May 2014 (2014-05-07)<br>    description, paragraphs 0035-0039 | 1-15 |
| Y | CN 110610546 A (GUANGDONG OPPO MOBILE TELECOMMUNICATIONS CORP., LTD.) 24 December 2019 (2019-12-24)<br>    description, paragraph [0056] | 1-15 |

☑ Further documents are listed in the continuation of Box C.          ☑ See patent family annex.

| | |
|---|---|
| *      Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **18 January 2021** | **27 January 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**

| International application No. |
|---|
| **PCT/CN2020/125386** |

**C.    DOCUMENTS CONSIDERED TO BE RELEVANT**

| Category* | Citation of document, with indication, where appropriate, of the relevant passages | Relevant to claim No. |
|---|---|---|
| A | US 2014204089 A1 (ELECTRONICS AND TELECOMMUNICATIONS RESEARCH INSTITUTE) 24 July 2014 (2014-07-24)<br>    entire document | 1-15 |

Form PCT/ISA/210 (second sheet) (January 2015)

**INTERNATIONAL SEARCH REPORT**
Information on patent family members

International application No.

**PCT/CN2020/125386**

| Patent document cited in search report | | | Publication date (day/month/year) | Patent family member(s) | | | Publication date (day/month/year) |
|---|---|---|---|---|---|---|---|
| CN | 111210510 | A | 29 May 2020 | None | | | |
| CN | 110378994 | A | 25 October 2019 | WO | 2019196745 | A1 | 17 October 2019 |
| CN | 110363858 | A | 22 October 2019 | None | | | |
| CN | 103778661 | A | 07 May 2014 | None | | | |
| CN | 110610546 | A | 24 December 2019 | None | | | |
| US | 2014204089 | A1 | 24 July 2014 | KR | 20140093836 | A | 29 July 2014 |

Form PCT/ISA/210 (patent family annex) (January 2015)

**REFERENCES CITED IN THE DESCRIPTION**

**Patent documents cited in the description**

- CN 202010049667